# EUROPEAN PATENT APPLICATION

(11) **EP 4 477 585 A1**
(43) Date of publication of application: **18.12.2024**
(21) Application number: 24182331.9
(22) Date of filing: 14.06.2024
(51) Int. Cl.: B65G 47/08, B65G 47/52, B65G 54/02, H02K 41/03

(54) **AN APPARATUS FOR FORMING A LAYER OF PRODUCTS AND ITS METHOD**

(30) Priority: 16.06.2023 IT 202300012507
(71) Applicant: FMT S.r.l., Frazione Riccò 43045 Fornovo di Taro (Parma) (IT)
(72) Inventor: MONTANARI, Michele, 43045 FORNOVO DI TARO (PR) (IT)
(74) Representative: Silva, Valentina

(57) **Abstract**

An apparatus (100) for forming a layer (250) of products (200), in particular for palletizing, comprising a product feeder (3) adapted to transfer the products (200) to a layer forming table (1), wherein said products (200) are positioned and directed to form an exact status configuration (250) of products (200), characterized in that the layer forming table (1) comprises a static plane (10) onto which a magnetic field is applied, and which cooperates with permanent magnets that are built-in in corresponding shuttle members (2), to keep said shuttle members (2) levitating above the surface (10b) of the static plane (10) allowing to freely move said shuttle members (2) in the bidimensional space, each shuttle member (2) being configured to support a product (200), or a portion of product (200), or more than a product (200) contacting an engaging surface (200a) of the product (200) and said shuttle member (2) adapted to be arranged in an inlet zone (12) of the layer forming table (1) in the proximity of the product feeder (3) from which it receives said product (200) and to translate and/or rotate in order to place and direct said product (200) and to form the layer (250) in a preparation zone (13) of the layer forming table (1).

## Description

### FIELD OF APPLICATION OF THE INVENTION

The present invention is in the field of apparatuses for forming a layer of products.

Said apparatus is preferably part of a product storage plant. In particular, the apparatus can be installed upstream a palletizer for forming layers of product which, once overlapped, form a pallet.

### STATE OF THE ART

Different kinds of apparatuses for forming layers of product are known to the state of the art.

Said apparatuses are suitable to process different kinds of products.

In fact, by the term products are generally meant empty or full containers, such as bottles, jars, cans, etc., or packages of containers such as, for example, cartons, crates, bundles, etc.

For example, the containers can be containers in PET, or glass, aluminium, etc.

Therefore, the products processed by a layer forming device are more generally primary or secondary packaging products.

The layers that are formed from said products generally have an outer perimeter which is substantially similar to that of the pallet onto which they will be placed.

Said layers require to arrange the products according to a certain configuration so that the layer contains the maximum number of products and that these are positioned so as to ensure the stability of the layer once it is deposited onto the pallet or other layers.

Therefore, said products require to be positioned and oriented in a specific position of the layer.

A known example of forming device provides for one or more parallel conveyors onto which the products arrive, taking an arrangement in rows.

The rows of products may comprise products that have been preliminarily rotated by means of rotation means, to achieve the desired configuration of the layer.

A pusher generally pushes the rows gradually formed, onto a layer formation area, which receives them to complete the layer before its transfer to gripping means, for example of the palletizer.

A different known solution involves feeding the products onto a mobile table onto which said products advance and onto which they are oriented and positioned by handling means, such as anthropomorphic or Cartesian robots, so as to take the proper position in the layer. Once the layer or part of it has been formed, it is taken from the mobile table by gripping means, for example, of the palletizer or a robotic head.

All these solutions include a multiplicity of mechanical devices, such as a pusher, rotation means, handling means, which make the forming area complex, and difficult to access by the operator.

Furthermore, the plurality of devices entails significant maintenance times and costs.

In addition, the above-mentioned devices include movable mechanical parts that are very dangerous and must be equipped with protection systems to ensure the operator's safety.

It should also be noted that the aforementioned forming apparatuses are generally suitable to process products such as cartons, crates, bundles, but are not suitable to process loose products such as bottles, jars, or cans.

### DISCLOSURE AND ADVANTAGES OF THE FINDING

The technical problem underlying the present invention is to provide an apparatus and a method for forming a layer of products structurally and functionally designed to overcome one or more of the limitations set out above with reference to the mentioned prior art.

Within the scope of the above-mentioned problem, a main object of the invention is to develop an apparatus and a method for forming a layer of products that is easily accessible to the operator.

In particular, the apparatus for forming a layer of products that is the object of the invention is able to guarantee high flexibility in the management of different kinds of products and different layer configurations.

Furthermore, it allows the development of an apparatus for forming a layer of products which simplifies the maintenance and safety operations of the apparatus.

In particular, it is the object of the invention an apparatus for forming a layer of products, in particular for palletizing.

Said apparatus preferably comprises a product feeder adapted to transfer the products to a layer forming table in which said products are positioned and directed to form an exact status configuration of products.

The layer forming table preferably comprises a static plane onto which a magnetic field is applied, and which cooperates with permanent magnets that are built-in in corresponding shuttle members, to keep said shuttle members levitating above the surface of the static plane.

Advantageously the shuttle members freely move in the bidimensional space of the static plane.

In particular, each shuttle member is configured to support a product, or a portion of product, or more than one product, preferably contacting an engaging surface of the product.

Preferably, said shuttle member is adapted to be arranged in an inlet zone of the layer forming table is in the proximity of the product feeder, from which it receives said product and to translate and/or rotate in order to place and direct said product and to form the layer in a preparation zone of the layer forming table.

Advantageously, the shuttle member is capable of tilting and varying the height distance thereof relative to the static plane.

The shuttle member preferably comprises 6 degrees of freedom.

The shuttle member preferably performs an outward path from the inlet zone towards the preparation zone of the layer forming table by moving in a central zone of the static plane.

The shuttle member preferably performs a return path from the preparation zone towards the inlet zone by moving in a side zone of the static plane.

The shuttle member preferably is a planar member preferably having a size that is smaller than the product to be processed.

The feeder preferably comprises an end facing the inlet zone of the forming table in which a recess is defined to receive at least one portion of the shuttle member and position it below an operational surface of the feeder onto which the engaging surface of the products rests. This allows transferring the product by downfall and not by dragging.

The preparation zone preferably coincides with a withdrawing zone.

Preferably the preparation zone or preferably the withdrawing zone comprises a transferring device that withdraws/displaces the layer supported by the shuttle members or by thrust, making the products sliding on the shuttle members or by gripping the products apart in height on the shuttle members.

Preferably the shuttle members vary their height relative to the static plane, in order to release the layer to a support device of the transferring device arranged above or below the static plane.

Advantageously, the forming table comprises an accumulation zone between the preparation zone and the withdrawing zone to allow the storage of a further layer of products.

The apparatus 1 preferably comprises viewing means preferably arranged in the preparation and/or withdrawing zone to control the formation of the layer before the withdrawing.

The shuttle members preferably have different speeds along the static plane, and in particular, at least in the feeding zone, the speed thereof is synchronized with the feeder, and vice versa.

The apparatus preferably comprises a control unit to manage the forming table as a function of the product and/or the layer.

Object of the invention is also the method for forming a layer of products, in particular for palletizing, which provides for transferring the products to a layer forming table in which said products are positioned and directed to form an exact status configuration of products.

Said method provides for a plurality of shuttle members configured to support a product or a portion of product or more than a product contacting an engaging surface of the product and freely move said products in the bidimensional space, by means of magnetic forces to translate and/or rotate in order to place and direct said product and form the layer.

Said method preferably provides for tilting the shuttle member in order to reduce the fall height of the product during the loading/unloading phase of the product to the shuttle member.

These and other objects are achieved by virtue of the features of the invention set forth in the independent claim. The dependent claims outline preferred and/or particularly advantageous aspects of the invention.

Said objects and advantages are all achieved by the improved apparatus for forming a layer of products, which is the object of the present invention, which is characterized by what is foreseen in the claims reported below.

### BRIED DESCRIPTION OF THE FIGURES

This and other characteristics will be further highlighted by the following description of some embodiments, which are illustrated purely by way of example and limitation in the attached drawing tables.

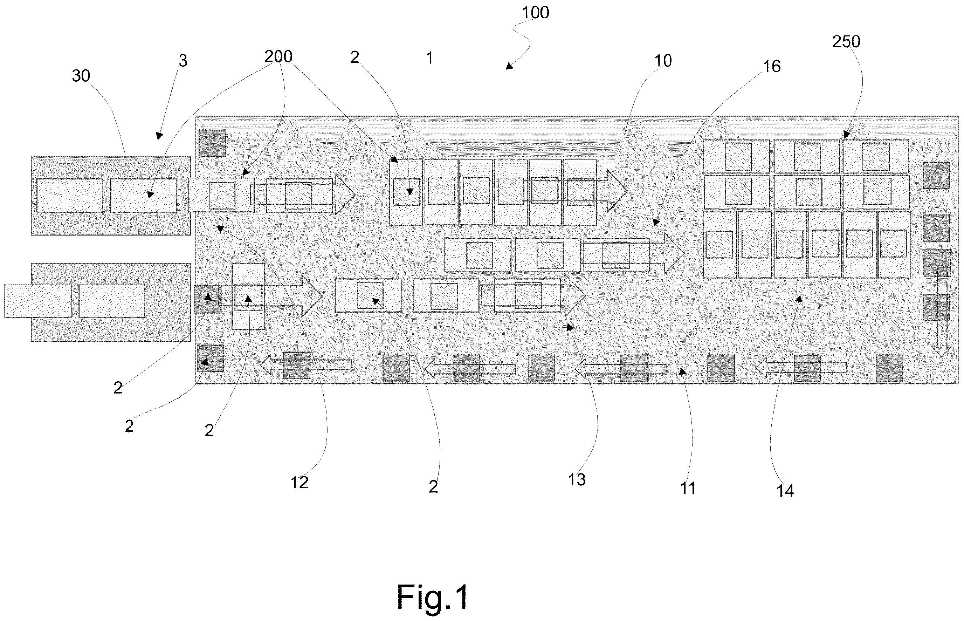

- Fig. 1: shows a plan view of an apparatus for forming a layer of products according to the invention;
- Fig. 2a: shows a side view of an apparatus with highlighted magnetic fields;
- Fig. 2b: shows a plan view of an apparatus with a feeder with guides;
- Fig. 3: shows a sectional view of a preferred solution of the passage between feeder and forming table;
- Fig. 4a, 4b: shows a sectional view of a solution of the transferring device that operates on the forming table;
- Fig. 5: shows a sectional view of a preferred solution of the transferring device that operates on the forming table;
- Fig. 6a, 6b: shows a plan view of the working phases of a preferred solution of the transferring device that operates on the forming table.

### DESCRIPTION OF THE INVENTION

Referring in particular to the Figure, an apparatus 100 for forming a layer 250 of products 200 is depicted.

In particular, said layer 250 is suitable for palletizing.

By the term layer 250 is meant a plurality of products 200 that are positioned and oriented to form a precise configuration.

A layer 250 can be completed, i.e., with the size of the pallet that has to receive it, or a portion of a layer 250.

In the text, by the term layer 250 a layer or a portion thereof will be always meant.

The apparatus 100 preferably comprises a product feeder 3 adapted to transfer the products 200 to a layer 250 forming table 1.

Onto said forming table 1, the products 200 are positioned and directed to form an exact status configuration 250 of products 200.

In particular, said forming table 1 comprises an inlet zone 12 in the proximity of the product feeder 3 from which it receives said product 200.

In particular, said forming table 1 comprises a preparation zone 13 in which each product 200 is translated and/or rotated to position and orient it so as to form the desired layer 250.

After the formation of the layer 250, the withdrawal or movement of the entire layer or a portion 250 thereof can be performed, in which special withdrawal/movement means are operatively connected with said forming table 1.

According to a preferred embodiment depicted in the Figure, the forming table 1 comprises a static plane 10 onto which a magnetic field 10a is induced.

Said magnetic field 10a is preferably made by electromagnets.

Said magnetic field 10a cooperates with permanent magnets 2a that are built-in in corresponding shuttle members 2.

Said technology allows keeping said shuttle members 2 levitating above the surface 10b of the static plane 10.

In particular, said shuttle members 2 are floating on the magnetic field 10a of the static plane 10, and able to move theron in any position.

This magnetic interaction allows freely moving said shuttle members 2 in the bidimensional space of the static plane 10.

According to an aspect of this levitatinh technology, the shuttle member 2 is capable of tilting and varying the height thereof relative to the static plane 10.

The shuttle member 2 preferably comprises 6 degrees of freedom, which allow the maximum movement flexibility thereof.

By virtue of this technology, the shuttle members 2 may have different speeds along the static plane 10 to adapt to the several operative steps, for example, feeding, accumulation, or withdrawal, as will be better described below.

According to an aspect of the invention, as depicted in the Figure, the shuttle member 2 is a planar member 21.

The thickness of the planar member 21 is reduced compared to the other dimensions, and in particular defined by the permanent magnets 2a built-in therein.

The engaging surface 200a of the product 200 can be preferably the lower surface or bottom of the product 200.

Said engaging surface 200a of the product 200 contacts by resting the shuttle member 2 which supports it, in particular on the resting surface 2b thereof.

During handling of the shuttle member 2, the product 200 is kept in position by the friction between the engaging surface 200a of the product 200 and the resting surface 2b of the shuttle member 2.

Therefore, operation occurs without retention means which must generally be adequate for the shape or dimensions of the product 200.

This conformation is functional to adapt to all types of products 200 without requiring format changes.

According to an advantageous aspect of the invention, each shuttle member 2 is configured to support a product 200 or a portion of product 200 or more than a product 200 by engaging on the engaging surface 200a of the product 200.

The planar member 21 may be of a size preferably less than the engaging surface 200a of the smallest product 200 to be processed.

This allows bringing the products 200 closer together until they are in contact with each other.

In fact, the configurations of the layers 250 often involve having the products 200 in contact with each other to obtain stable layers 250 and with the maximum use of the available space.

If the planar member 21 was much smaller than the larger product 200, it would be necessary to use two or more shuttle members 2 to move a single product 200.

Therefore, in such a case, two or more shuttle members 2 will position themselves below the product 200 so that each shuttle member 2 supports a portion of product 200 by contacting a portion of its engaging surface 200a.

If on the contrary the planar member 21 were larger than the product 200, it can be expected that the shuttle member 2 would support more than a product 200 simultaneously.

The handling flexibility of the shuttle members 2 allows to find a number of working solutions and combinations depending on the variety and the kind of products 200.

A preferred embodiment provides for the shuttle member 2 to be able of arranging itself in the inlet zone 12 of the layer forming table 1, in particular, in the proximity of the product feeder 3 from which it receives said product 200.

Once the product 200 is loaded, the shuttle member 2 can begin to translate and/or rotate in order to place and direct said product 200 in order to form the layer 250 or a portion thereof.

Object of the invention is also the method for forming a layer 250 of products 200, which provides for a plurality of shuttle members 2 configured to support a product 200 or a portion of product 200 or more than a product 200 contacting an engaging surface 200a of the product 200 and to freely move said products 200 in the bidimensional space, by means of magnetic forces to translate and/or rotate in order to place and direct said product 200 and to form the layer 250.

As depicted in the figures, reception of the product 200 takes place in the inlet zone 12 of the layer forming table 1.

In particular, the shuttle member 2 positions itself in the inlet zone 12 approaching the feeder 3.

The feeder may include, as represented in the figures, one or more conveyors 30 which end near an edge of the layer forming table 1 at the inlet zone 12.

A type of conveyors 30 that can be used provides that each conveyor 30 includes two transfer belts in sequence.

In particular, the one in the proximity of the forming table 1 has a greater speed than the one preceding.

This is intended to space the products 200 from each other to facilitate the transfer of only one product 200 at a time to the shuttle member 2.

The passage of the product 200 from the feeder 3 to the shuttle member 2 can occur by thrust or downfall.

The choice of one or the other solution is related to the type of product 200 to be processed in the apparatus 100.

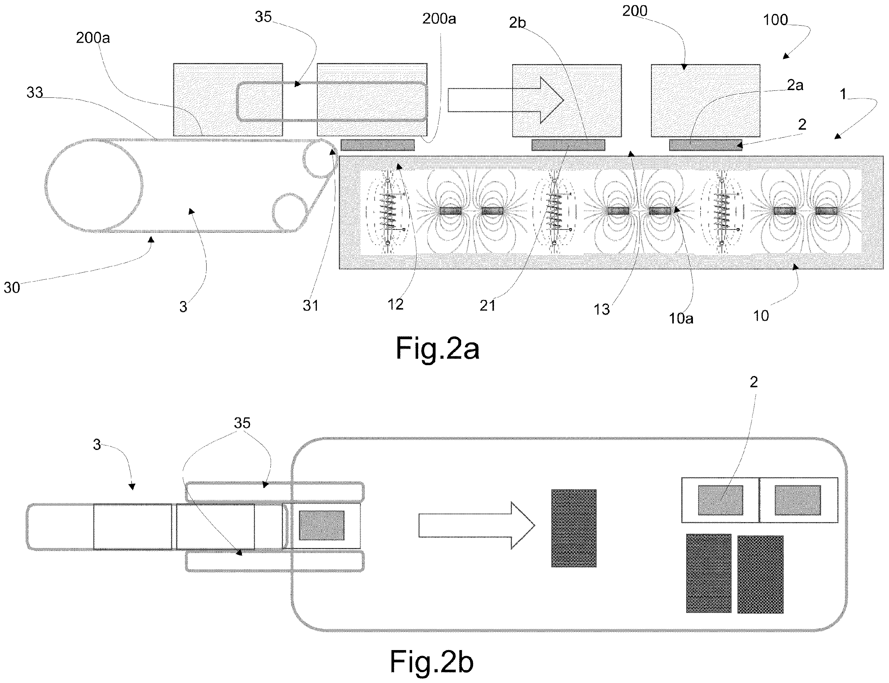

In both solutions, guides 35 can be provided on the feeder 3, to keep the product 200 in a proper position during the passage from the feeder 3 to the shuttle member 2. In particular, said guides 35 may project from the feeder 3 to drive the product 200 until it is completely positioned on the shuttle member 2. As depicted in Figs. 2a and 2b. The product 200 can be pushed on the shuttle member 2, which is stationary in front of the feeder 3. This involves a sliding of the engaging surface 200a of the product 200 on the resting surface 2b of the shuttle member 2.

The thrust can be achieved by the advancement action of the conveyor or by specially designed thrusting means, or by other possible solutions known to those skilled in the art.

In alternative, the product 200 can pass on the shuttle member 2 without sliding.

In such a case, for example the shuttle member 2 has to take the same speed of the product 200 on the feeder 3.

A possible embodiment depicted in Figure 2 provides for the guides 35 of the feeder 3 to comprise a pair of movable, opposite tracks that accompany the product 200 by engaging onto the side surface thereof.

Said tracks and the shuttle member 2 coordinate in speed to facilitate the transferof the product 200.

In this case, the shuttle member 2 waits for the tracks to position the product 200 equidistant from the others and then transfer the product 200, in synchronous speed with the shuttle member 2.

Therefore, it is necessary to manage the two speeds of the feeder 3 and of the shuttle member 2 in a coordinated manner.

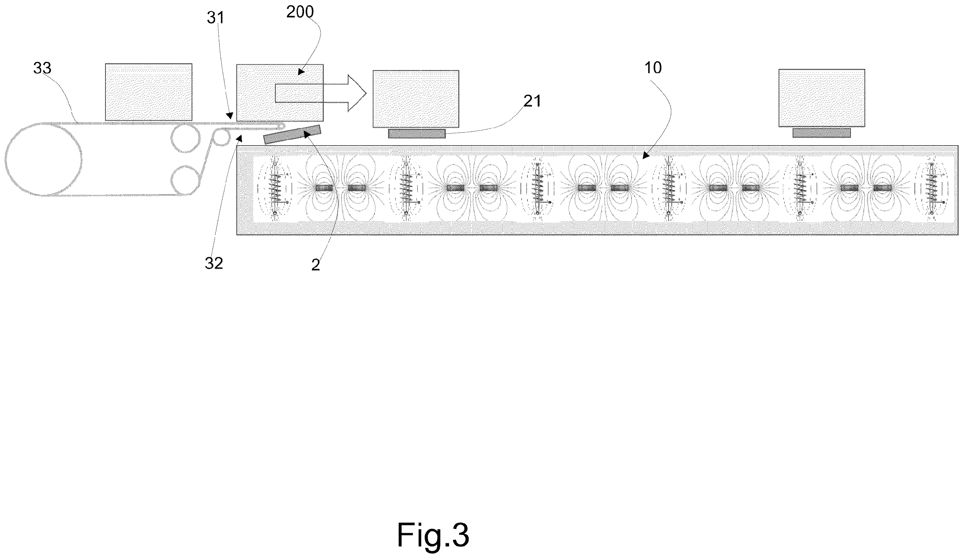

In order to optimize the passage of the product 200 without sliding, a possible embodiment provides for making the feeder 3, which comprises an end 31 facing the inlet zone 12 of the forming table 1 as depicted in figure 3.

At said end 31, a recess 32 is defined to receive at least one portion of the shuttle member 2 and to position it below an operational surface 33 of the feeder 3 onto which the engaging surface 200a of the products 200 rests.

As depicted in figure 3, when the shuttle member 2 is in the recess 32, it is a few millimeters below the operational surface 33 to avoid an excessive downfall of the product 200.

When the shuttle member 2 is in the recess 32, it begins to move in the advancement direction A of the feeder 3 and preferably with a speed that is synchronized with that of the feeder 3.

This allows transferring the product 200 by performing a very limited fall and without causing any sliding of the engaging surface 200a of the product 200.

To further optimize the passage of the product, decreasing the fall height, an advantageous form of operation may provide for tilting the shuttle member 2.

Therefore, the apparatus 100 provides for a shuttle member 2 which tilts when approaching the loading/unloading plane of the product 200.

In particular, when the shuttle member 2 is in the recess 32 it is tilted by lifting, in the advancement direction of the product 200, a part of the shuttle member 2 which overflows from the recess 32 to approach its engaging surface 200a.

The operating method preferably provides that, once the product 200 has been transferred to the shuttle member 2, this performs an outward path from the inlet zone 12 towards the preparation zone 13 of the layer forming table 1.

Preferably, the method and the apparatus provided that said outward path of the shuttle member 2 occurs by moving in a central zone 16 of the static plane 10.

By central zone 16 is meant far from the two edges of the static plane 10 which extend parallel to the direction of advancement A.

Preferably the shuttle member 2 performs a return path from the preparation zone 13 towards the inlet zone 12 by moving in a side zone 11 of the static plane 10.

By side zone 11 is meant in the proximity of the two edges of the static plane 10 which extend parallel to the direction of advancement A.

By virtue of this solution, the shuttle members 2 carrying the product 200 and move to form the layer 250, or a portion thereof, are not hindered in their movement by the shuttle members 2 which, having already downloaded the product 200, return to the inlet zone 12 to load a new product 200.

This allows to manage a greater amount of shuttle members 2 on the same static plane 10, thus improving the production rate of the apparatus 100.

The method provides that once the shuttle members 2 are positioned so that the corresponding products 200 are arranged to form the layer 250 with the desired arrangement, said layer 250 can be taken care of by a special transferring device 4, not shown in the figure.

Said transferring device 4 is operatively connected with said forming table 1 and configured to perform the withdrawal or the movement of the entire layer 250.

Once the layer 250 has been collected, the shuttle members 2 return in the opposite direction to the direction of advancement A towards the inlet zone 2 to restart the forming cycle.

According to a preferred embodiment of the method and the apparatus 100, the preparation zone 13 coincides with a withdrawing zone 14 of the forming table 1.

The withdrawing zone 14 corresponds to the one in which the withdrawal/movement means operate, which transfer the formed layer 250, for example to a palletizer.

This configuration means makes so that the forming table 1 is very compact, because the layer 250 is prepared and removed in the same space.

However, this may have the disadvantage of slowing down the operating cycle of the apparatus 100 since, until the layer 250 has been withdrawn, it is not possible to form new layers 250.

An alternative solution, depicted in the figure, provides that the preparation zone 13 is followed instead by a withdrawing zone 14.

This solution improves the production rate of the apparatus 100, but requires more space.

With a view to further improving the production rate of the apparatus 100, a solution may provide that the forming table 1 comprises an accumulation zone between the preparation zone 13 and the withdrawing zone 14 to allow the storage of a further layer 250 of products 200.

This allows to continue forming layers 250 even during brief stops of the machines downstream, without stopping the apparatus 100.

An embodiment not depicted in the figure provides that the preparation zone 13, or preferably the withdrawing zone 14, comprises a transferring device 4 that withdraws/displaces the layer 250 supported by the shuttle members 2.

The working method provides that said device 4 preferably withdraws/moves the layer 250 or by thrust, making the products 200 sliding on the shuttle members 2 or by gripping spacing in height the products 200 from the shuttle members 2.

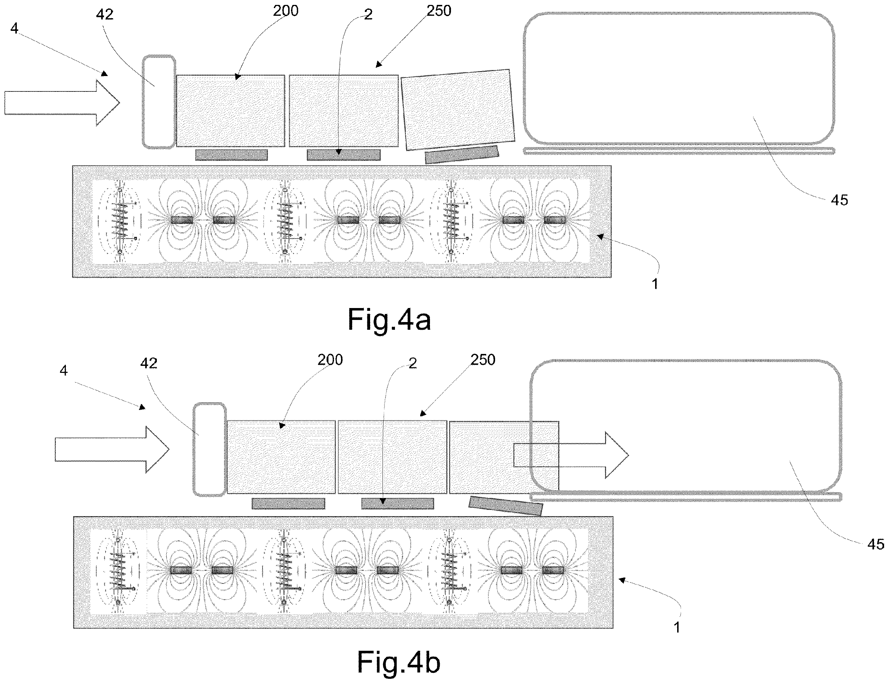

In the solution depicted in Figures 4a, 4b, the transferring device 4 comprises a pusher 42 for transferring the layer 250, which pushes the layer 250 or part thereof onto a plane or gripping head 45.

According to a preferred aspect of the method, the shuttle member 2 in particular coordinates its speed and position with the pusher 42.

Preferably the shuttle member 2 advances towards the plane or gripping head 45 during the advancement of the pusher 42.

Preferably, as depicted in figure 4a, the shuttle member 2 arranged in the proximity of the plane or gripping head 45 tilts, lifting a portion thereof in the direction of advancement of the product 200, if necessary, to promote the passage of the product 200 on the plane or gripping head 45.

Once the shuttle member 2 has released the product 200 to the plane or gripping head 45, as depicted in figure 4b, it can tilt in the opposite direction to the previous one to continue below said plane or gripping head 45 without interfering with it.

Therefore the working method also involves tilting the shuttle member 2 in order to reduce the fall height of the product 200 during the loading/unloading phase of the product 200 to the shuttle member 2.

According to an aspect of the invention the shuttle members 2 can vary their height relative to the static plane 10, in order to release the layer 250 to a support device 41 of the transferring device.

This solution allows you to withdraw the layer 250 without making the products 200 sliding on the shuttle members 2.

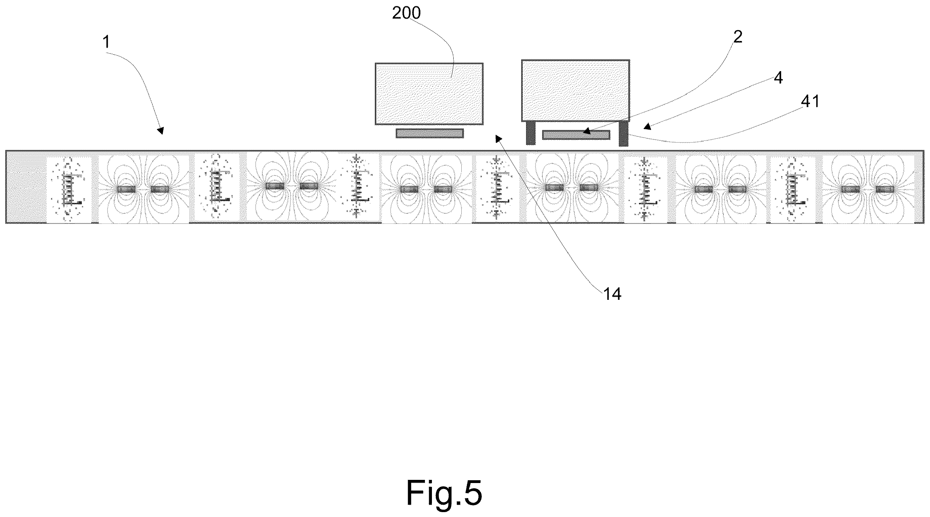

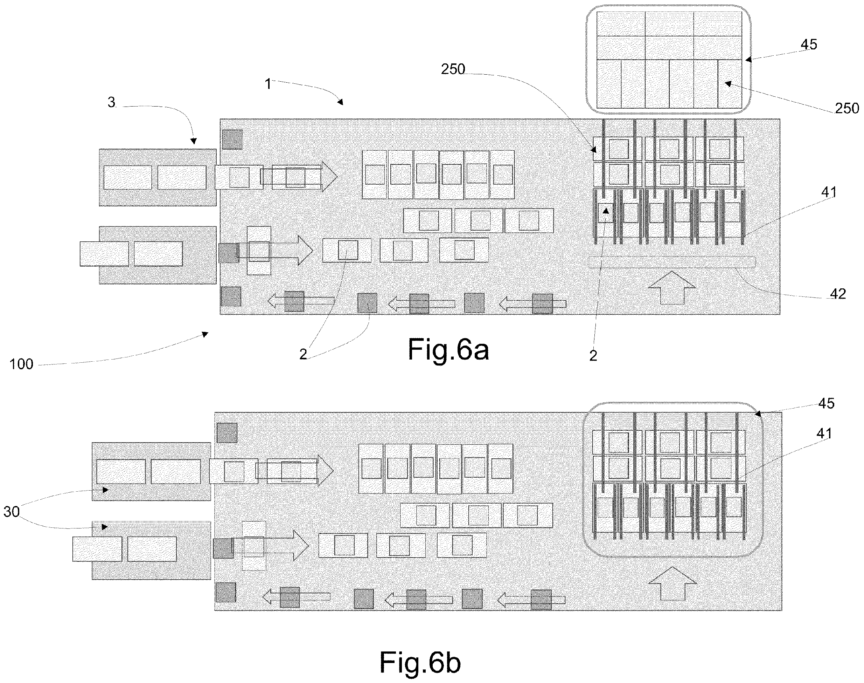

Said support device 41 is preferably arranged above the static plane 10 as depicted in figures 5, 6a, 6b.

A preferred form provides for the shuttle members 2 to rise from the static plane 10 to arrange above the support device 41, so as to arrange the layer 250 above said support device 41, as depicted in figured 6a, 6b. At this point the support device 41 rises above the height of the shuttle members 2, or the shuttle members 2 lower under the support device 41, to take charge of the layer 250 and free the shuttle members 2 from the product 200.

An alternative form may provide that the support device 41 is buried in the static plane 10 so as not to protrude therefrom.

In such a case, the shuttle members 2 remain at the same height from the static plane 10.

Once the layer 250 has been placed on top of said support device 41, as depicted in figures 6a, 6b, this can be lifted to take charge of the layer 250 and free the shuttle members 2 from the product 200.

Once said support device 41 has taken charge of the layer 250, the transfer of the layer 250 takes place, in particular by means of the transfer pusher 42, which pushes the layer 250 or part of it outside of the forming table 1, preferably on the plane or gripping head 45.

Preferably, as depicted in figures 6a, 6b, the support device 41 can comprise a plurality of stationary and/or movable members to support the layer 250 at the time of transferring it from the forming table 1 to the plane or gripping head 45. Other possible solutions that exploit the mobility of the shuttle members 2 in order to release the layer to the transferring device 4 are to be understood as falling within the protection scope of the invention.

An advantageous solution may provide that the apparatus 100 includes viewing means to control the formation of the layer 250 before the withdrawal.

Said viewing means are preferably arranged in the preparation zone 13 and/or withdrawing 14.

By virtue of this solution, the work of the operator is facilitated who, given the signal provided by the viewing means, may intervene to arrange the layer 250 directly on the forming table 1, in a comfortable and safe position, and avoid more burdensome and risky interventions to be carried out after the deposition of the layer 250 onto the pallet.

According to an aspect of the invention, the apparatus 100 comprises a control unit to manage the forming table 1 in the most flexible and customized manner.

For example, by virtue of the control unit, the apparatus 100 is able to manage a plurality of recipes dedicated to a specific product 200 and its possible configurations of layers 250 that are required.

In addition, by virtue of the control unit, it is possible to adapt the working speeds of the shuttle members 2 to the type of product 200, possibly varying them from one zone to the other one.

In addition, by virtue of the control unit, it is possible to synchronize the shuttle members 2 with the feeder 3, and/or with the transferring device 4.

Moreover, by virtue of the control unit, it is possible to manage viewing means in relation to the recipes to be made.

These and other possible ways of using the apparatus 100 are made possible and/or optimized by the presence of the control unit.

However, it is understood that what is described above has an illustrative, non-limiting value; therefore, any variations in detail that may be necessary due to technical and/or functional reasons are considered from now on to fall within the same protection scope defined by the claims reported herein below.

## Claims

1. An apparatus (100) for forming a layer (250) of products (200), in particular for palletizing, comprising a product feeder (3) adapted to transfer the products (200) to a layer forming table (1), wherein said products (200) are positioned and directed to form an exact status configuration (250) of products (200), **characterized in that** the layer forming table (1) comprises a static plane (10) onto which a magnetic field is applied, and which cooperates with permanent magnets that are built-in in corresponding shuttle members (2), to keep said shuttle members (2) levitating above the surface (10b) of the static plane (10) allowing to freely move said shuttle members (2) in the bidimensional space, each shuttle member (2) being configured to support a product (200), or a portion of product (200), or more than a product (200) contacting an engaging surface (200a) of the product (200) and said shuttle member (2) adapted to be arranged in an inlet zone (12) of the layer forming table (1) in the proximity of the product feeder (3) from which it receives said product (200), and to translate and/or rotate in order to place and direct said product (200) and to form the layer (250) in a preparation zone (13) of the layer forming table (1).

2. The apparatus (100), according to claim 1, wherein the shuttle member (2) is capable of tilting and varying the height distance thereof relative to the static plane (10), and preferably the shuttle member (2) comprises 6 degrees of freedom.

3. The apparatus (100), according to any one of the preceding claims, wherein the shuttle member (2) performs an outward path from the inlet zone (12) towards the preparation zone (13) of the layer forming table (1) by moving in a central zone (16) of the static plane (10).

4. The apparatus (100), according to any one of the preceding claims, wherein the shuttle member (2) performs a return path from the preparation zone (13) towards the inlet zone (12) by moving in a side zone (11) of the static plane (10).

5. The apparatus (100), according to any one of the preceding claims, wherein the shuttle member (2) is a planar member (21) preferably having a size that is smaller than the smallest product (200) to be processed.

6. The apparatus (100), according to any one of the preceding claims, wherein the feeder (3) comprises an end (31) facing the inlet zone (12) of the forming table (1) in which a recess (32) is defined, to receive at least one portion of the shuttle member (2) and position it below an operational surface (33) of the feeder (3) onto which the engaging surface (200a) of the products (200) rests per to allow transferring the product (200) by downfall and not by dragging.

7. The apparatus (100), according to any one of the preceding claims, wherein the preparation zone (13) coincides with a withdrawing zone (14).

8. The apparatus (100), according to any one of the preceding claims, wherein the preparation zone (13) or preferably the withdrawing zone (14) comprises a transferring device (4) that withdraws/displaces the layer (250) supported by the shuttle members (2) or by thrust, making the products (200) sliding on the shuttle members (2), or by gripping spacing the products (200) in height on the shuttle members (2).

9. The apparatus (100), according to claim 8, wherein the shuttle members (2) vary their height relative to the static plane (10), in order to release the layer (250) to a support device (41) of the transferring device (4) arranged above or below the static plane (10).

10. The apparatus (100), according to any one of the claims 7 to 9, wherein the forming table (1) comprises an accumulation zone between the preparation zone (13) and the withdrawing zone (14) to allow the storage of a further layer (250) of products (200).

11. The apparatus (100), according to any one of the preceding claims, which comprises viewing means preferably arranged in the preparation zone (13) and/or withdrawing means (14) to control the formation of the layer (250) before the withdrawing .

12. The apparatus (100), according to any one of the preceding claims, wherein the shuttle members (2) have different speeds along the static plane (10) and in particular at least in the feeding zone (12) the speed thereof is synchronized with the feeder (3), and vice versa.

13. The apparatus (100), according to any one of the preceding claims, which comprises a control unit to be able to manage the forming table (1) as a function of the product (200) and/or the layer (250).

14. A method for forming a layer (250) of products (200), in particular for palletizing, which provides for transferring the products (200) to a layer forming table (1) in which said products (200) are positioned and directed to form an exact status configuration (250) of products (200), **characterized in that** it provides for a plurality of shuttle members (2) configured to support a product (200) or a portion of product (200), or more than a product (200) contacting an engaging surface (200a) of the product (200) and to freely move said products (200) in the bidimensional space, by means of magnetic forces to translate and/or rotate to position and direct said product (200) and to form the layer (250).

15. The method according to claim 14, which provides for tilting the shuttle member (2) in order to reduce the fall height of the product (200) during the loading/unloading phase of the product (200) to the shuttle member (2).
